(19) Europäisches Patentamt
European Patent Office
Office européen des brevets

(11) **EP 1 447 916 B1**

(12) **FASCICULE DE BREVET EUROPEEN**

(45) Date de publication et mention
de la délivrance du brevet:
**13.06.2007 Bulletin 2007/24**

(51) Int Cl.:
***H04B 1/707*** *(2006.01)*

(21) Numéro de dépôt: **03100970.7**

(22) Date de dépôt: **10.04.2003**

(54) **Procédé et dispositif de détection de données transmises par étalement de spectre**

Verfahren und Vorrichtung zur Spreizspektrumdatendetektion

Method and apparatus for spread-spectrum data detection

| | |
|---|---|
| (84) Etats contractants désignés:<br>**AT BE BG CH CY CZ DE DK EE ES FI FR GB GR HU IE IT LI LU MC NL PT SE SI SK TR** | (56) Documents cités:<br>**WO-A-99/65160** |
| (30) Priorité: **12.04.2002 FR 0204616** | • WANG X ET AL: "ADAPTIVE JOINT MULTIUSER DETECTION AND CHANNEL ESTIMATION IN MULTIPATH FADING CDMA CHANNELS" 1 octobre 1998 (1998-10-01), WIRELESS NETWORKS, ACM, US, VOL. 4, NR. 6, PAGE(S) 453-470 , XP000791610 ISSN: 1022-0038 * abrégé * * page 461, colonne 2, alinéa 2 - page 463, colonne 1, alinéa 3; figure 1 * |
| (43) Date de publication de la demande:<br>**18.08.2004 Bulletin 2004/34** | |
| (73) Titulaire: **Commissariat à l'Energie Atomique**<br>**75015 Paris (FR)** | |
| (72) Inventeurs:<br>• **Noguet, Dominique**<br>**38870 Saint Sine De Bressieux (FR)**<br>• **Bouvier des Noes, Mathieu**<br>**38000, GRENOBLE (FR)** | • KUNG H T: "Systolic algorithms and their implementation" 4 janvier 1984 (1984-01-04), PROCEEDINGS OF THE SEVENTEENTH HAWAII INTERNATIONAL CONFERENCE ON SYSTEM SCIENCES 1984, HONOLULU, HI, USA, 4-6 JAN. 1984 , 1984, HONOLULU, HI, USA, HAWAII INT. CONFERENCE ON SYST. SCI, USA, PAGE(S) 5 - 11 VOL.1 , XP008012173 * abrégé * * page 5 - page 7 * |
| (74) Mandataire: **Viering, Hans-Martin et al**<br>**Viering, Jentschura & Partner**<br>**Patent- und Rechtsanwälte**<br>**Postfach 22 14 43**<br>**80504 München (DE)** | |

**Description**

**Domaine technique et art antérieur**

La présente invention concerne un procédé de détection de données transmises par étalement de spectre par séquence directe ainsi qu'un dispositif pour mettre en oeuvre le procédé.

Le domaine d'application de l'invention est le domaine des transmissions numériques à étalement de spectre par séquence directe plus communément appelées transmissions numériques ESSD (ESSD pour « Etalement de Spectre par Séquence Directe »). Les transmissions numériques ESSD sont utilisées dans les systèmes à accès multiples par répartition de codes communément appelés systèmes AMRC (AMRC pour « Accès Multiple à Répartition par les Codes ») ou encore systèmes CDMA (CDMA pour « Code Division Multiple Access).

Dans un système CDMA, les utilisateurs partagent la même bande de fréquences. La discrimination entre utilisateurs est rendue possible par l'assignation de codes d'étalement différents à chaque utilisateur.

Le récepteur d'un utilisateur particulier reçoit non seulement le signal qui lui est destiné mais également des signaux destinés à d'autres utilisateurs. Il est alors nécessaire de minimiser les interférences qui résultent des signaux reçus destinés aux autres utilisateurs, interférences communément appelées bruit d'accès multiples ou bruit MAI (MAI pour « Multiple Access Interférence »). Par ailleurs, il est également nécessaire de diminuer le bruit inhérent au canal de transmission.

Le signal reçu en entrée d'un récepteur numérique est représenté par le vecteur complexe e tel que :

$$e = A.d + n \qquad (1)$$

où :

- A est une matrice complexe qui dépend de la réponse impulsionnelle du canal et des codes d'étalement relatifs au système CDMA,
- d est un vecteur complexe constitué des données émises par les utilisateurs et que l'on cherche à estimer,
- n est un vecteur de bruit aléatoire.

Le récepteur calcule un vecteur $\hat{d}$, qui est le vecteur estimé de d, à partir de la connaissance du vecteur e et de la matrice A préalablement évaluée ou calculée. Le vecteur $\hat{d}$ doit être aussi proche que possible de d. Pour cela, on cherche à annuler les distorsions et les perturbations introduites par la chaîne de transmission entre l'émetteur et le récepteur. Cette opération d'annulation des distorsions et des perturbations s'appelle égalisation. Une égalisation parfaite conduit à $\hat{d}$ = d.

Une difficulté essentielle réside dans le fait que le récepteur ne dispose pas de suffisamment d'informations pour résoudre l'équation (1). La résolution de l'équation (1) est alors basée sur l'utilisation de critères d'optimisation dans le but d'obtenir une égalisation parfaite.

Diverses techniques sont connues pour résoudre l'équation (1). Parmi ces techniques, la technique de détection conjointe consiste à estimer la globalité du vecteur d, c'est-à-dire la totalité des données émises par l'ensemble des utilisateurs. Dans ce cas, le vecteur estimé $\hat{d}$ est calculé par une équation du type:

$$\hat{d} = L^{-1}.A^{H}.e \qquad (2)$$

dans laquelle:

- $L^{-1}$ est la matrice inverse d'une matrice L, communément appelée matrice d'égalisation, qui est une matrice carrée de taille NxN et dont l'expression dépend de critères d'optimisation choisis pour résoudre l'équation (1), et
- $A^{H}$ représente la matrice symétrique hermitienne de la matrice A (c'est-à-dire la matrice transposée conjuguée de A).

Différents exemples de détection conjointe peuvent être cités. Un premier exemple concerne une détection selon laquelle la matrice L s'écrit $A^{H}.A$ et qui vise à annuler le bruit MAI (égalisation ZF, ZF pour « Zero Forcing »). Un deuxième exemple concerne une détection selon laquelle la matrice L s'écrit $A^{H}.A + \sigma^2 I$, où $\sigma^2$ est la variance du bruit n et I la matrice identité (égalisation MMSE, MMSE pour « Minimum Mean Square Error »). Dans ce dernier cas, la distance entre le vecteur estimé $\hat{d}$ et le vecteur d est évalué sans distinguer l'effet du bruit n de l'effet du bruit MAI.

De façon générale, pour résoudre l'équation (2), le récepteur commence par calculer le vecteur z=A$^H$.e à partir de la matrice A qu'il connaît et du vecteur des données reçues e. L'équation (2) peut alors se mettre sous la forme :

$$z = L.\hat{d} \qquad (3)$$

Une technique classique de résolution de l'équation (3) consiste à inverser la matrice L et à multiplier à droite les 2 termes de l'équation (2) par la matrice L$^{-1}$, inverse de la matrice L. Cette technique doit cependant être écartée dans les cas où la matrice L est de grande taille et où le temps disponible pour résoudre l'équation (3) est très limité. C'est la cas, par exemple, du mode TDD (TDD pour « Time Division Duplex ») du système UMTS (UMTS pour « Universal Mobile Telecommunication System »). La résolution de l'équation (3) doit alors en effet être effectuée en moins de 0,666 ms pour une matrice L dont la taille peut être d'environ 500x500 coefficients complexes. La technique classique par inversion de la matrice L mentionnée ci-dessus ne permet pas la résolution de l'équation (3).

Devant la complexité des problèmes posés, des architectures vectorielles ont été proposées (cf. « A vector multiprocessor for real-time multi-user détection in spread spectrum communication », IEEE International Conference on Application Specific Systems, Architectures and Processors, Boston, Juillet 2000). Ces architectures n'ont cependant été conçues que pour résoudre des systèmes linéaires de petite taille (matrice 32 x 32). La transposition directe de telles architectures à des systèmes de détection du domaine de l'invention dont la taille peut atteindre, par exemple, 500 x 500 (cf. ci-dessus) n'est pas envisageable car cela conduirait également à mettre en oeuvre des systèmes matériels, par exemple des processeurs, d'une extrême complexité.

Une autre technique, qui nécessite moins de calculs, consiste à tirer partie des propriétés de la matrice L pour en faire une décomposition de Cholesky donnée par la formule L=U$^H$.U où U est une matrice triangulaire supérieure de taille NxN dont les éléments notés $u_{ij}$ sont déterminés à partir des éléments de la matrice L notés $l_{ij}$.

La résolution de l'équation (3) se déroule alors en 2 étapes. Une première étape est une décomposition de Cholesky de la matrice L pour obtenir la matrice U. Il vient alors :

$$Z = L.\hat{d} = U^H.U.\hat{d} \qquad (4)$$

Une deuxième étape consiste à résoudre successivement l'équation:

$$z = U^H.y \qquad (5)$$

qui permet d'obtenir la matrice y à partir des matrices U$^H$ et *z* connues, et l'équation :

$$y=U.\hat{d} \qquad (6)$$

qui permet d'obtenir $\hat{d}$ à partir des matrices U et y calculées précédemment.

Ces opérations sont programmées sur un ordinateur classique, voire un processeur de traitement de signal (DSP). Cependant, les performances de ceux-ci ne permettent également pas d'atteindre les performances temps réel pour les matrices de grande taille mentionnées ci-dessus.

Dans le document:- WANG X ET AL: "ADAPTIVE JOINT MULTIUSER DETECTION AND CHANNEL ESTIMATION IN MULTIPATH FADING CDMA CHANNELS" 1 octobre 1998 (1998-10-01), WIRELESS NETWORKS, ACM, US, VOL. 4, NR. 6, PAGE(S) 453-470 et le document:- KUNG H T: "SYSTOLIC ALGORITHMS AND THEIR IMPLEMENTATIONS" 4 janvier 1984 (1984-01-04), PROCEEDINGS OF THE SEVENTEENTH HAWAII INTERNATIONAL CONFERENCE ON SYSTEM SCIENCES 1984, HONOLULU, HI, USA, 4-6 JAN. 1984 , 1984, HONOLULU, HI, USA, HAWAII INT. CONFERENCE ON SYST. SCI, USA, PAGE(S) 5-11 VOL.1 00, les moyens de mise en ouvre de la décomposition de Cholesky comprennent de cellules de réseau systolique. L'efficacité énergétique est de ce fait augmentée, mais un autre circuit pour mettre en oeuvre la résolution du système triangulaire est toujours nécessaire.

L'invention ne présente pas les inconvénients mentionnés ci-dessus.

## Exposé de l'invention

En effet, l'invention concerne un dispositif de détection conjointe de données transmises par étalement de spectre par séquence directe, le dispositif comprenant des moyens de mise en oeuvre d'une décomposition de Cholesky pour calculer une matrice U telle que :

$$L = U^H \times U,$$

où L est une matrice d'égalisation et U une matrice triangulaire supérieure. Les moyens de mise en oeuvre d'une décomposition de Cholesky comprennent :

- des moyens pour calculer les coefficients diagonaux $u_{i,i}$ de la matrice U selon la formule :

$$u_{i,i} = \sqrt{l_{i,i} - \sum_{k=1}^{i-1} \left| u_{k,i} \right|^2} \qquad (1)$$

où $l_{i,i}$ est le coefficient diagonal de la ligne de rang i de la matrice L et $u_{k,i}$ est le coefficient de la ligne de rang k et de la colonne de rang i de la matrice U, et
- des moyens pour calculer les coefficients non diagonaux de la matrice sous la forme :

$$u_{i,j} = \frac{l_{i,j} - \sum_{k=1}^{i-1} u_{k,i}^* \cdot u_{k,j}}{u_{i,i}},$$

les moyens pour calculer les coefficients non diagonaux comprenant :
- un réseau de N cellules MAC montées en série, chaque cellule MAC comprenant une entrée d'accumulation, une sortie d'accumulation, une entrée de retour, une sortie de retour et une entrée de coefficient, la sortie d'accumulation de la cellule de rang p (p=1 à N) étant reliée à l'entrée d'accumulation de la cellule de rang p+1,
- une cellule diagonale comprenant une entrée d'accumulation, une entrée de coefficient de soustraction, une entrée de coefficient de division, une sortie de résultat et une sortie de retour, l'entrée d'accumulation de la cellule diagonale étant reliée à la sortie d'accumulation de la cellule MAC de rang N,
- des moyens de chargement des coefficients $u^*_{k,i}$ sur les entrées de retour des cellules MAC,
- des moyens de chargement des coefficients $u_{k,j}$ sur les entrées de coefficient des cellules MAC,
- des moyens de chargement des coefficients $u_{i,i}$ sur l'entrée de coefficient de division de la cellule diagonale, et
- des moyens de chargement des coefficients $l_{i,j}$ sur l'entrée de coefficient de soustraction de la cellule diagonale.

Selon un premier mode de réalisation de l'invention, les moyens de chargement des coefficients $u^*_{k,i}$ sur les entrées de retour des cellules MAC sont constitués d'un ensemble de N multiplexeurs ($M_1$, $M_2$, ..., $M_N$) commandés par un premier état de commande, chaque multiplexeur ayant une première entrée, une deuxième entrée et une sortie, la sortie d'un multiplexeur de rang p (p=1, 2, ..., N) étant reliée à l'entrée de retour de la cellule MAC de même rang, la première entrée du multiplexeur de rang p étant reliée à un coefficient $u^*_{k,i}$ différent d'un multiplexeur à l'autre, la deuxième entrée du multiplexeur de rang p étant reliée à la sortie de retour de la cellule MAC de rang p+1, la deuxième entrée du multiplexeur de rang N étant reliée à la sortie de retour de la cellule diagonale, le premier état de commande établissant une connexion électrique directe entre la première entrée et la sortie de chaque multiplexeur.

Selon un deuxième mode de réalisation de l'invention, la sortie de retour de la cellule MAC de rang p (p=1, 2, ..., N) est reliée à l'entrée de retour de la cellule MAC de rang p-1, les moyens de chargement des coefficients $u^*_{k,i}$ sur les entrées de retour des cellules MAC sont constitués d'un multiplexeur commandé par un premier état de commande, le multiplexeur ayant une première entrée, une deuxième entrée et une sortie, la sortie du multiplexeur étant reliée à l'entrée de retour de la cellule MAC de rang N, la première entrée du multiplexeur étant reliée, successivement, à un parmi les coefficients u*$_{k,i}$ et la deuxième entrée du multiplexeur étant reliée à la sortie de retour de la cellule diagonale, le premier état de commande établissant une connexion électrique directe entre la première entrée du multiplexeur et la sortie du multiplexeur.

Selon encore une caractéristique supplémentaire du dispositif de l'invention, les cellules MAC, la cellule diagonale et l'ensemble des multiplexeurs commandés par un deuxième état de commande constituent un réseau permettant de calculer le vecteur estimé d qui correspond au vecteur d des données émises par les utilisateurs.

L'invention concerne également un procédé de détection conjointe de données transmises par étalement de spectre par séquence directe, le procédé comprenant une étape de décomposition de Cholesky pour calculer une matrice U telle que :

$$L = U^H \times U,$$

où L est une matrice d'égalisation et U une matrice triangulaire supérieure. L'étape de décomposition de Cholesky comprend :

- une étape pour calculer les coefficients diagonaux u$_{i,i}$ de la matrice U selon la formule :

$$u_{i,i} = \sqrt{l_{i,i} - \sum_{k=1}^{i-1} |u_{k,i}|^2} \qquad (1)$$

où l$_{i,i}$ est le coefficient diagonal de la ligne de rang i de la matrice L et u$_{k,i}$ est le coefficient de la ligne de rang k et de la colonne de rang i de la matrice U, et
- une étape pour calculer les coefficients non diagonaux u$_{i,j}$ de la matrice sous la forme :

$$u_{i,j} = \frac{l_{i,j} - \sum_{k=1}^{i-1} u_{k,i}^* . u_{k,j}}{u_{i,i}},$$

l'étape pour calculer les coefficients non diagonaux comprenant
- une étape de chargement des coefficients u*$_{k,i}$ sur des entrées de retour de cellules MAC montées en série, chaque cellule MAC comprenant une entrée d'accumulation, une sortie d'accumulation, une entrée de retour, une sortie de retour et une entrée de coefficient, la sortie d'accumulation de la cellule de rang p (p=1 à N) étant reliée à l'entrée d'accumulation de la cellule de rang p+1,
- une étape de chargement des coefficients u$_{k,j}$ sur les entrées de coefficient des cellules MAC,
- une étape de chargement des coefficients u$_{i,i}$ sur une entrée de coefficient de division d'une cellule diagonale, la cellule diagonale (DIAG) comprenant une entrée de coefficient de soustraction, une sortie de résultat, une entrée de retour, une sortie de retour et une entrée de coefficient de division, l'entrée d'accumulation de la cellule diagonale étant reliée à la sortie d'accumulation de la cellule MAC de rang N, et
- une étape de chargement des coefficients l$_{i,j}$ sur l'entrée de retour de la cellule diagonale.

Selon le premier mode de réalisation de l'invention, les coefficients u*$_{k,i}$ sont chargés en parallèle sur les entrées de retour des cellules MAC.

Selon le deuxième mode de réalisation de l'invention, les coefficients u*$_{k,i}$ sont chargés successivement sur les entrées de retour des cellules MAC, à partir de la cellule MAC de rang N.

Selon une caractéristique supplémentaire de l'invention, le procédé comprend une étape de calcul du vecteur estimé d̂ qui correspond au vecteur d des données émises par les utilisateurs. L'étape de calcul du vecteur estimé d̂ comprend :

- une première étape de résolution de système linéaire triangulaire par la récurrence

$$y_i = \frac{1}{u_{ii}^{H}}\left(z_i - \sum_{k=1}^{i-1} u_{ik}^{H} y_k\right)$$

pour la résolution de l'équation $z = U^{H}.y$, avec $y = U.\hat{d}$ , et

- une deuxième étape de résolution de système linéaire triangulaire par la récurrence

$$\hat{d}_i = \frac{1}{u_{ii}}\left(y_i - \sum_{k=i+1}^{N} u_{ik}\hat{d}_k\right)$$

pour la résolution de l'équation $y = U.\hat{d}$ .

Avantageusement, le procédé de détection conjointe selon l'invention met en oeuvre les opérations de décomposition de Cholesky et de résolution de système triangulaire à l'aide des mêmes circuits, permettant ainsi de diminuer la complexité matérielle du dispositif.

Des moyens de contrôle permettent de contrôler le chargement séquentiel des différents circuits (cellules MAC, cellule diagonale, multiplexeurs) par les coefficients appropriés.

Dans les équations ci-dessus, les coefficients $u_{ii}$, $u_{ij}$, a, $a_d$, b, accu sont généralement des nombres complexes. Il faut cependant noter que l'invention concerne également le cas où ces coefficients sont des nombres réels.

Par ailleurs, il faut noter que la matrice U est une matrice bande. Le calcul des coefficients $u_{i,i}$ et $u_{i,j}$ mentionné ci-dessus n'est donc effectué que pour des coefficients $u_{k,i}$ et $u_{k,j}$ non nuls. Dans la suite de la description, les coefficients $u_{k,i}$ et $u_{k,j}$ non nuls seront préférentiellement notés $u_{kp,i}$ et $u_{kp,j}$ avec p=1, 2, ...., N.

**Brèves description des figures**

D'autres caractéristiques et avantages de l'invention apparaîtront à la lecture d'un mode de réalisation préférentiel fait en référence aux figures jointes parmi lesquelles

- les figures 1A et 1B représentent un premier type de cellule utilisée dans le dispositif de détection selon l'invention ;
- la figure 2 illustre un exemple de réalisation du premier type de cellule représentée aux figures 1A et 1B ;
- les figures 3A et 3B représentent un deuxième type de cellule utilisée dans le dispositif de détection selon l'invention,
- la figure 4 représente un premier mode de réalisation du dispositif de détection selon l'invention ,
- la figure 5 représente un deuxième mode de réalisation du dispositif de détection selon l'invention,
- la figure 6 représente la mise en oeuvre de l'étape de décomposition de Cholesky à l'aide d'un dispositif de détection selon le premier mode de réalisation de l'invention,
- la figure 7 représente la mise en oeuvre de l'étape de décomposition de Cholesky à l'aide d'un dispositif de détection selon le deuxième mode de réalisation de l'invention,
- la figure 8 représente un exemple de mise en oeuvre de l'étape de décomposition de Cholesky à l'aide d'un dispositif de détection selon le premier mode de réalisation de l'invention,
- la figure 9 représente la mise en oeuvre d'une première étape de résolution de système triangulaire à l'aide d'un dispositif de détection selon le premier mode de réalisation de l'invention,
- la figure 10 représente la mise en oeuvre d'une deuxième étape de résolution de système triangulaire qui succède à la première étape de résolution de système triangulaire à l'aide d'un dispositif de détection selon le premier mode de réalisation de l'invention.

Sur toutes les figures, les mêmes références désignent les mêmes éléments.

**Description détaillée de modes de mise en oeuvre de l'invention**

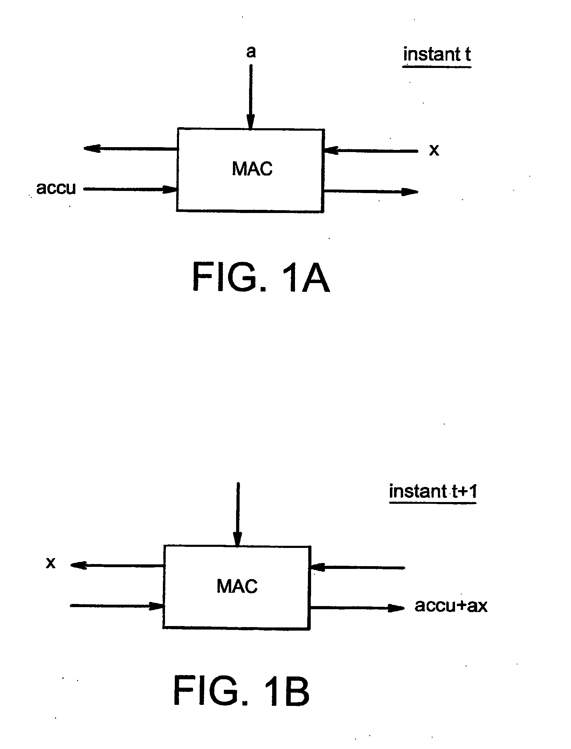

Les figures 1A et 1B représentent un premier type de cellule utilisée dans le dispositif de détection selon l'invention.

Ce premier type de cellule, appelée cellule MAC (MAC pour « Multiplication Accumulation »), est munie de trois entrées et de deux sorties. Les figures 1A et 1B représentent respectivement les signaux entrant et sortant d'une cellule MAC aux instants t et t+1. Si à l'instant t, les trois entrées reçoivent respectivement les grandeurs accu, x et a (cf. figure 1A), alors, à l'instant t+1, les deux sorties délivrent les grandeurs x et accu+ax (cf. figure 1B). Pour des raisons de commodité, dans la suite de la description, les entrées/sorties d'une cellule MAC seront nommées comme suit :

- l'entrée qui reçoit à l'instant t la grandeur accu sera nommée entrée d'accumulation de cellule MAC,
- l'entrée qui reçoit à l'instant t la grandeur a sera nommée entrée de chargement de coefficient de cellule MAC,
- l'entrée qui reçoit à l'instant t la grandeur x sera nommée entrée de retour de cellule MAC,
- la sortie qui délivre à l'instant t+1 la grandeur accu+ax sera nommée sortie d'accumulation de cellule MAC,
- la sortie qui délivre à l'instant t+1 la grandeur x sera nommée sortie de retour de cellule MAC.

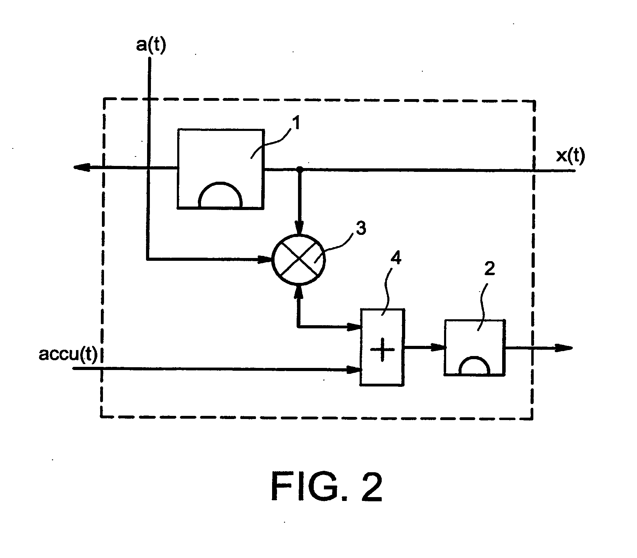

La figure 2 représente un exemple de cellule MAC utilisée dans le dispositif de détection selon l'invention.

La cellule comprend deux opérateurs de retard 1, 2, un multiplicateur 3 et un additionneur 4. A l'instant t, un coefficient a est appliqué sur l'entrée de chargement de coefficient, une donnée x(t) entre dans l'opérateur de retard 1 et une donnée accu(t) entre dans l'additionneur 4. Le multiplicateur 3 multiplie le coefficient a et la donnée x(t) . L'additionneur 4 somme la donnée accu(t) et la donnée ax(t) délivrée par le multiplicateur 3. La donnée accu(t) + ax(t) qui entre dans l'opérateur de retard 2 à l'instant t en sort à l'instant t+1 et la donnée x(t) qui entre dans l'opérateur de retard 1 à l'instant t en ressort à l'instant t+1.

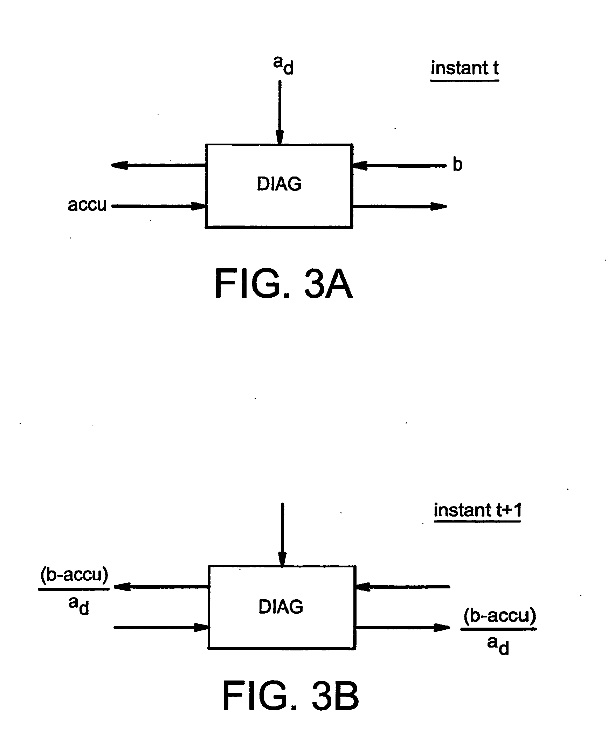

Les figures 3A et 3B représentent un deuxième type de cellule utilisée dans le dispositif de détection selon l'invention ;

Ce deuxième type de cellule, appelée cellule diagonale, est également munie de trois entrées et de deux sorties. Les figures 3A et 3B représentent respectivement les signaux entrant et sortant d'une cellule diagonale aux instants t et t+1. Si à l'instant t, les trois entrées reçoivent respectivement les grandeurs accu, b et $a_d$ (cf. figure 3A), alors, à l'instant t+1, les deux sorties délivrent la grandeur (b-accu)/$a_d$ (cf. figure 3B). Pour des raisons de commodité, dans la suite de la description, les entrées/sorties d'une cellule diagonale seront nommées comme suit :

- l'entrée qui reçoit à l'instant t la grandeur accu sera nommée entrée d'accumulation de cellule diagonale,
- l'entrée qui reçoit à l'instant t la grandeur $a_d$ sera nommée entrée de chargement du coefficient $a_d$ ou entrée de coefficient de division de cellule diagonale,
- l'entrée qui reçoit à l'instant t la grandeur b sera nommée entrée de coefficient de soustraction de cellule diagonale,
- les sorties qui délivrent à l'instant t+1 la grandeur (b-accu)/$a_d$ seront nommées, l'une, sortie de résultat de cellule diagonale et, l'autre, sortie de retour de cellule diagonale, selon le sens de circulation des données, comme cela sera précisé ultérieurement.

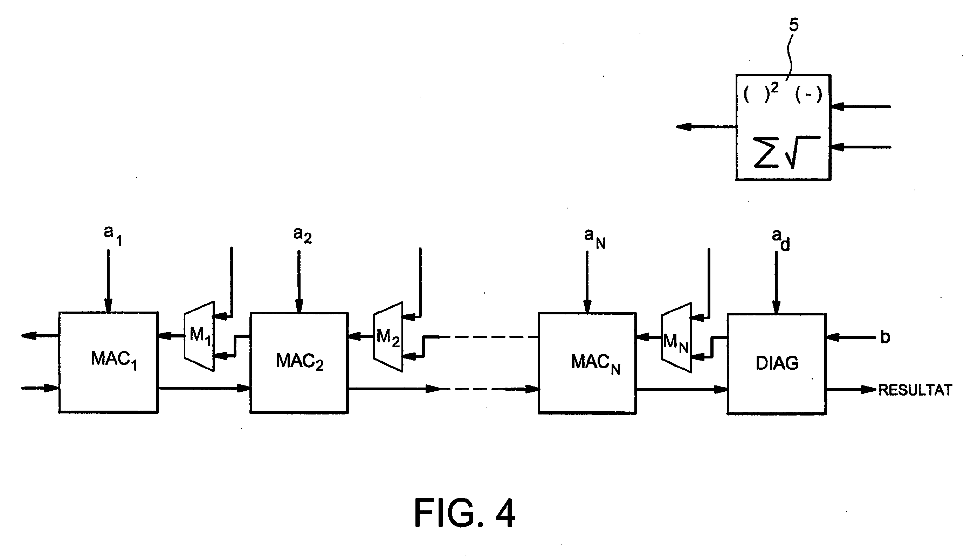

La figure 4 représente un premier mode de réalisation de dispositif de détection selon l'invention.

Le dispositif de détection selon le premier mode de réalisation de l'invention comprend un circuit 5 pour mettre en oeuvre l'équation (1), un ensemble de N cellules MAC, $MAC_1$, $MAC_2$, ..... $MAC_N$, une cellule diagonale DIAG et un ensemble de N multiplexeurs $M_1$, $M_2$, ...., $M_N$. Aux fins du calcul de l'équation (1), le circuit 5 comprend, par exemple, un opérateur d'élévation au carré, un additionneur, un soustracteur et un opérateur de calcul de racine carrée.

L'entrée d'accumulation de la cellule MAC de rang p (p=1, 2, ..., N) est reliée à la sortie d'accumulation de la cellule MAC de rang p-1 et la sortie d'accumulation de la cellule MAC de rang N est reliée à l'entrée d'accumulation de la cellule diagonale. Les entrées et sorties de retour des cellules MAC sont reliées par l'intermédiaire de multiplexeurs. Chaque multiplexeur a deux entrées et une sortie. L'entrée de retour de la cellule MAC de rang p (p=1, 2, ..., N-1) est alors reliée à la sortie du multiplexeur de rang p dont une des deux entrées est reliée à la sortie de retour de la cellule MAC de rang p+1. L'entrée de retour de la cellule MAC de rang N est reliée à la sortie du multiplexeur de rang N dont une des deux entrées est reliée à la sortie de retour de la cellule diagonale.

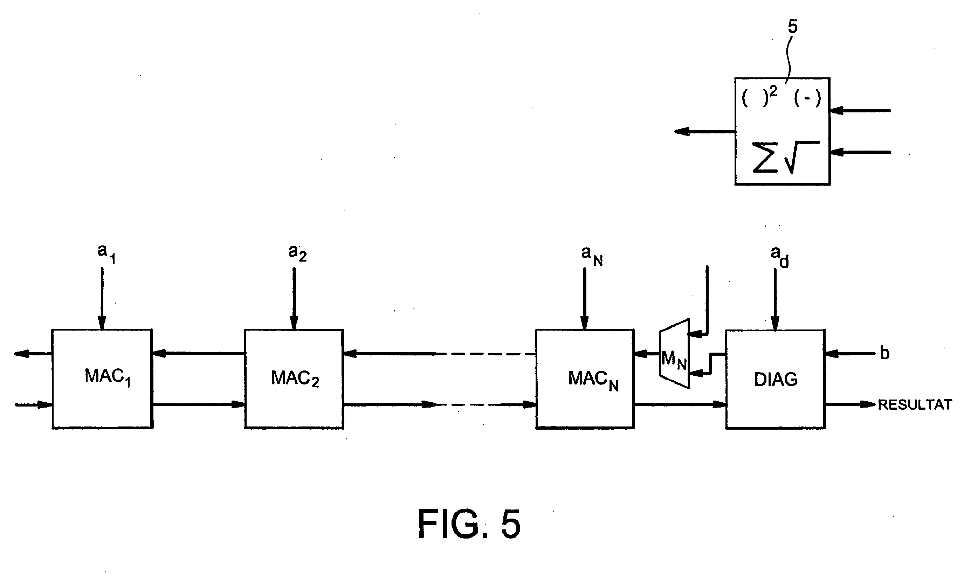

La figure 5 représente un deuxième mode de réalisation de dispositif de détection selon l'invention.

Le dispositif de détection selon le deuxième mode de réalisation de l'invention comprend un circuit 5 pour mettre en oeuvre l'équation (1), un ensemble de N cellules MAC, $MAC_1$, $MAC_2$, ..... $MAC_N$, une cellule diagonale DIAG et un multiplexeur $M_N$ ayant chacun deux entrées et une sortie.

Les entrées/sorties d'accumulation des cellules MAC sont reliées entre elles comme dans le cas de la figure 4. La sortie de retour de la cellule MAC de rang p (p=1, 2, ..., N) est ici reliée à l'entrée de retour de la cellule MAC de rang p-1. Le multiplexeur $M_N$ a sa sortie reliée à l'entrée de retour de la cellule MAC de rang N et une première entrée reliée à la sortie de retour de la cellule diagonale.

Comme cela a été mentionné précédemment, La décomposition de Cholesky consiste à calculer les coefficients $u_{i,j}$ d'une matrice U telle que :

$$L = U^{H} \times U$$

La matrice U est une matrice triangulaire supérieure. Le coefficient diagonal de la ligne i s'écrit :

$$u_{i,i} = \sqrt{l_{i,i} - \sum_{k=1}^{i-1} \left| u_{k,i} \right|^2} \qquad (1)$$

et les coefficients non diagonaux de la ligne i s'écrivent :

$$u_{i,j} = \frac{l_{i,j} - \sum_{k=1}^{i-1} u_{k,i}^* \cdot u_{k,j}}{u_{i,i}} \qquad (2)$$

Selon l'invention, les coefficients de la matrice U sont calculés ligne par ligne, de la première ligne à la dernière ligne, le coefficient diagonal d'une ligne étant calculé avant les coefficients non diagonaux de la ligne. A titre d'exemple non limitatif, pour une matrice U de taille 3x3, les coefficients peuvent successivement être calculés comme suit :

- $u_{11}$, puis $u_{12}$, puis $u_{13}$ pour la première ligne, puis
- $u_{22}$, puis $u_{23}$ pour la deuxième ligne, puis
- $u_{33}$ pour la troisième ligne.

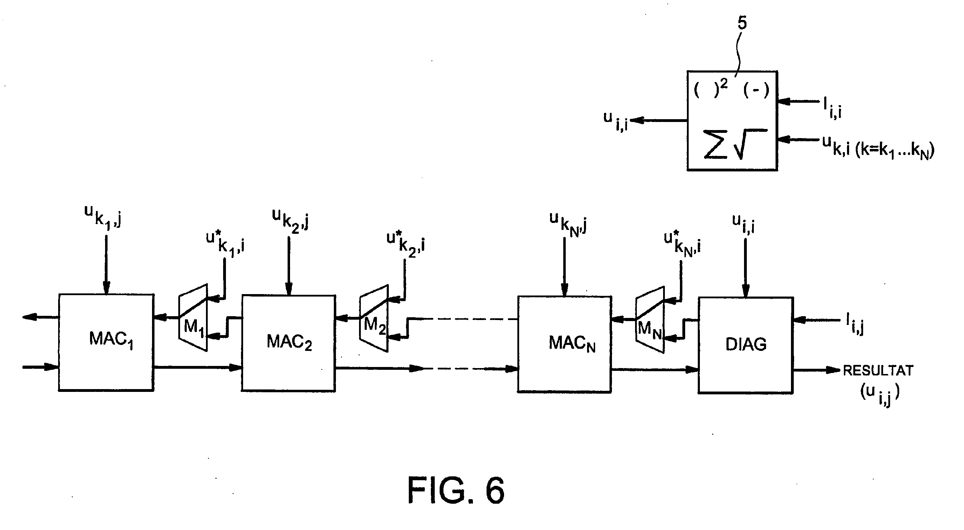

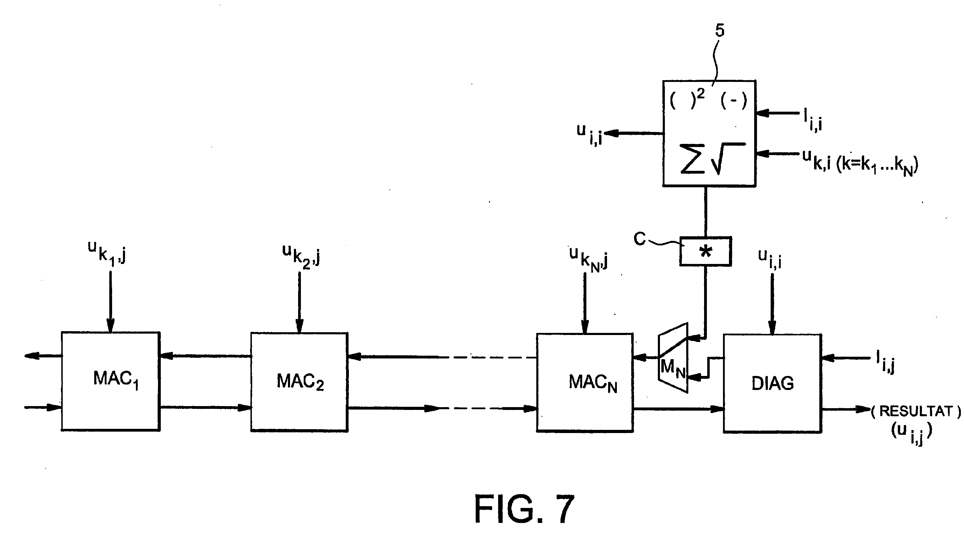

Les coefficients diagonaux $u_{i,i}$ sont calculés à l'aide du circuit 5 qui met en oeuvre l'équation (1).
Le principe du calcul des coefficients non diagonaux $u_{i,j}$ de la matrice U va maintenant être décrit en référence aux figures 6 et 7.
Lors du calcul de l'élément diagonal $u_{i,j}$, les entrées de retour des cellules MAC sont chargées avec les coefficients $u_{k,i}^*$. Le flot de retour est figé pendant le calcul de l'ensemble des coefficients $u_{i,j}$ d'une même ligne puisque les mêmes $u_{k,i}^*$ sont nécessaires au calcul de tous ces coefficients.

Deux modes de réalisation sont possibles pour le chargement des coefficients $u_{k,i}^*$.

La figure 6 représente un premier mode de chargement des coefficients $u_{k,i}^*$. Le premier mode de chargement des coefficients $u_{k,i}^*$ est le mode de chargement associé au premier mode de réalisation du dispositif de l'invention.
Les multiplexeurs commandés par un premier état de commande permettent un chargement en parallèle des $u_{k,i}^*$ sur les entrées de retour des cellules MAC lors du calcul des coefficients non diagonaux de la matrice U.

La figure 7 représente un deuxième mode de chargement des coefficients $u_{k,i}^*$. Le deuxième mode de chargement des coefficients $u_{k,i}^*$ est le mode de chargement associé au deuxième mode de réalisation du dispositif de l'invention.

Selon le deuxième mode de chargement, les $u_{k,i}^*$ sont chargés l'un après l'autre. Le multiplexeur $M_N$

commandé par un premier état de commande permet d'appliquer les $u^*_{k,i}$ sur l'entrée de retour de la cellule MAC de rang N.

Selon ce deuxième mode de chargement, le circuit 5 pour le calcul des éléments diagonaux peut être relié au multiplexeur $M_N$ comme cela est représenté en figure 7. Le coefficient $u_{k,i}$ qui est appliqué sur une entrée du circuit 5 est alors également appliqué en entrée d'un opérateur de conjugaison C qui délivre le coefficient $u^*_{k,i}$ qui est appliqué en entrée du multiplexeur $M_N$. Le calcul de la quantité $\sum_{k=1}^{i-1} \left| u_{k,i} \right|^2$ est alors réalisé pendant le chargement des registres du flot de retour. Une fois ce chargement terminé, le flot est figé pour calculer des éléments non diagonaux.

De façon plus générale, l'ordre dans lequel sont appliqués les coefficients $u^*_{ki}$ sur les différentes entrées de retour des cellules MAC n'a pas de réelle importance. En effet les produits $u^*_{ki}u_{kj}$ peuvent être calculés dans n'importe quel ordre avant d'être sommés. La seule condition à réaliser pour le chargement des coefficients $u^*_{ki}$ sur les entrées de retour des cellules MAC est le maintien du même indice i jusqu'à temps que la quantité

$$u_{i,j} = \frac{l_{i,j} - \sum_{k=1}^{i-1} u^*_{k,i} \cdot u_{k,j}}{u_{i,i}}$$ soit calculée.

Une condition à réaliser pour le calcul du coefficient $u_{i,j}$ est d'appliquer successivement, sur l'entrée de coefficient de la cellule MAC qui reçoit le coefficient $u^*_{ki}$ sur son entrée de retour, l'ensemble des coefficients $u_{k,j}$, j pouvant prendre toutes les valeurs possibles.

Les coefficients diagonaux et non diagonaux de la matrice U calculés sont stockés au fur et à mesure de leur détermination. A cette fin, le dispositif de détection conjointe selon l'invention comprend des circuits de mémorisation (non représentés sur les figures).

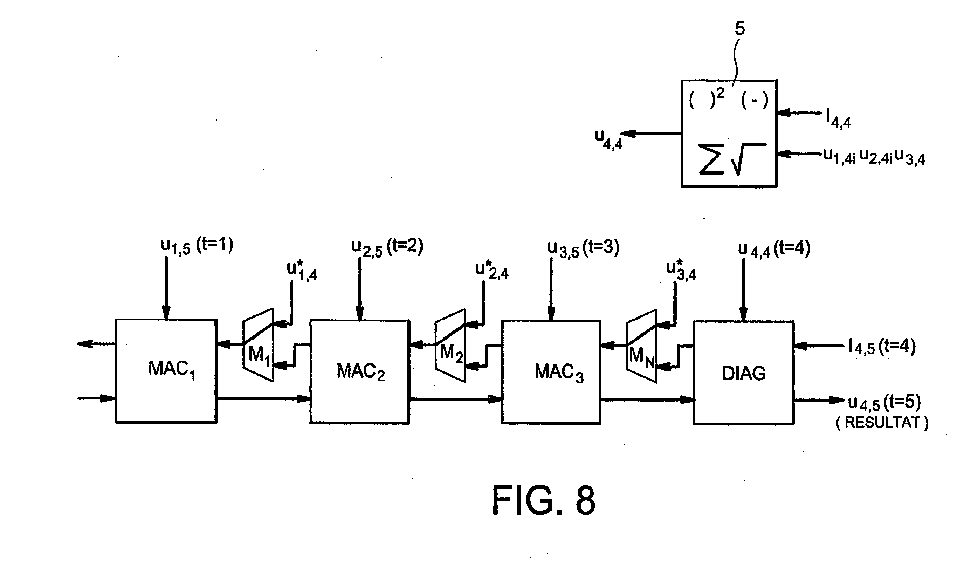

Un exemple non limitatif de calcul de coefficient $u_{i,j}$ de matrice U de taille supérieure à 4 va maintenant être donné en description de la figure 8.

Cet exemple correspond à une mise en oeuvre de l'invention selon le mode de chargement de coefficients représenté en figure 6. Le coefficient $u_{45}$ est calculé dans l'exemple décrit.

Le dispositif de détection comprend trois cellules MAC ($MAC_1$, $MAC_2$, $MAC_3$) et une cellule diagonale (DIAG). On suppose les entrées de retour des cellules $MAC_1$, $MAC_2$, $MAC_3$ chargées par les coefficients respectifs $u^*_{14}$, $u^*_{24}$, $u^*_{34}$.

A l'instant t=1, le coefficient $u_{15}$ est appliqué sur l'entrée de coefficient de la cellule $MAC_1$. Cette cellule voit alors sa sortie d'accumulation passer à $u^*_{14}u_{15}$ à l'instant t=2.

A l'instant t=2, c'est le coefficient $u_{25}$ qui est appliqué sur l'entrée de coefficient de la cellule $MAC_2$. Cette cellule voit alors sa sortie d'accumulation passer à $u^*_{24}.u_{25}$ + accu où accu est la valeur appliquée sur l'entrée d'accumulation de la cellule $MAC_2$ qui vaut $u^*_{14}u_{15}$. La sortie d'accumulation de la cellule $MAC_2$ vaut donc $u^*_{14}u_{15}+u^*_{24}u_{25}$.

A l'instant t=3, l'entrée de coefficient de la cellule $MAC_3$ est alimentée par $u_{35}$. La sortie d'accumulation de $MAC_3$ passe alors à la valeur $p_1=u^*_{34} \cdot u_{35}+u^*_{24}u_{25}+u^*_{14}.u_{15}$. La cellule diagonale voit donc la valeur $p_1$ sur son entrée d'accumulation. En appliquant respectivement $u_{44}$ et $l_{45}$ sur les entrées d'accumulation et de retour de la cellule diagonale, la sortie de résultat de la cellule diagonale passe à $u_{45}=\dfrac{l_{45} - p_1}{u_{44}}$ qui est la valeur que l'on cherche à calculer.

L'accumulation des termes de $p_1$ progresse vers la droite de la figure (sens des données accumulées). Les cellules MAC laissées sur la gauche ne sont alors plus utilisées. Il est alors avantageusement possible de réaffecter ces cellules au calcul de termes produits destinés aux autres éléments de la ligne courante suivante.

A titre d'exemple non limitatif, le tableau ci-après décrit la façon dont les coefficients $u_{kj}$ sont affectés aux cellules MAC pour le calcul des $u_{45}$, $u_{46}$, $U_{47}$ de l'exemple précédent.

TABLEAU

| TEMPS | MAC1 a | MAC2 a | MAC3 a | DIAG a | DIAG b | Res |
|-------|--------|--------|--------|--------|--------|-----|
| t=1 | $u_{15}$ | | | | | |
| t=2 | $u_{16}$ | $u_{25}$ | | | | |
| t=3 | $u_{17}$ | $u_{26}$ | $u_{35}$ | | | |

(suite)

| TEMPS | MAC1 a | MAC2 a | MAC3 a | DIAG a | DIAG b | Res |
|---|---|---|---|---|---|---|
| t=4 | | $u_{27}$ | $u_{36}$ | $u_{44}$ | $l_{45}$ | |
| t=5 | | | $u_{37}$ | $u_{44}$ | $l_{46}$ | $u_{45}$ |
| t=6 | | | | $u_{44}$ | $l_{47}$ | $u_{46}$ |
| t=7 | | | | | | $u_{47}$ |

Une fois la matrice U déterminée, le procédé selon l'invention comprend les étapes successives suivantes :

- une première étape de résolution de système linéaire triangulaire par la récurrence :

$$y_i \ = \ \frac{1}{u_{ii}^H}\left( z_i \ - \ \sum_{k=1}^{i-1} u_{ik}^H y_k \right)$$

pour la résolution de l'équation z=U$^H$.y, avec y=U. $\hat{d}$ , et
- une deuxième étape de résolution de système linéaire triangulaire par la récurrence :

$$\hat{d}_i \ = \ \frac{1}{u_{ii}}\left( y_i \ - \ \sum_{k=i+1}^{N} u_{ik}\hat{d}_k \right)$$

pour la résolution de l'équation y=U.$\hat{d}$ .

Pour les première et deuxième étapes de résolution de système linéaire triangulaire mentionnées ci-dessus, les multiplexeurs sont positionnés de façon que la sortie de retour de la cellule MAC de rang p (p=1, 2, ...,il N) soit directement reliée à l'entrée de retour de cellule MAC de rang p-1, la sortie de retour de la cellule diagonale étant directement reliée à l'entrée de retour de la cellule MAC de rang N.

La cellule diagonale et les cellules MAC constituent alors un réseau tel que celui décrit, par exemple, dans le document intitulé « Introduction to VLSI systems » (Kung, H.T. and Leiserson, C.E., chapter Systolic arrays for VLSI (chap.8.3), Addison-Wesley, 1980).

De façon connue en soi, un tel réseau permet de résoudre une équation du type *Ax=b* où A est une matrice triangulaire connue, b un vecteur connu et x un vecteur inconnu à déterminer.

Chaque composante du vecteur solution x est calculé selon la récurrence suivante:

$$\begin{cases} x_i^{(0)} \ = \ 0 \\ \quad \vdots \\ x_i^{(k)} \ = \ x_i^{(k-1)} + a_{i,k}.x_k \ \ \text{pour } 0 < k < i \qquad (6) \\ \quad \vdots \\ x_i \ = \ \left( b_i \ - \ x_i^{(i-1)} \right) / a_{i,i} \end{cases}$$

où $x_i^{(k)}$ représente la k$^{ième}$ étape de calcul de l'élément $x_i$.

Lorsqu'un élément $x_i^{(k)}$ initialisé à 0 circule dans le réseau, il accumule les produits calculés dans chaque cellule MAC. La valeur finale est calculée dans la cellule diagonale. Elle est alors réinjectée dans le réseau pour circuler inchangée en sens inverse dans le réseau, permettant ainsi aux éléments suivants $x_j^{(k)}$ (j > i) d'accumuler les produits $a_{j,i}x_i$. Plusieurs éléments $x_i^{(k)}$ sont ainsi calculés en parallèle de manière pipeline.

Les entrées et les sorties des cellules MAC entre lesquelles circulent les éléments $x_j^{(k)}$ calculés par accumulations successives sont respectivement les entrées d'accumulation et les sorties d'accumulation des cellules MAC. De même, les entrées et les sorties des cellules MAC entre lesquelles circulent les éléments $x_j^{(k)}$ réinjectés à partir de la cellule diagonale sont respectivement les entrées de retour et les sorties de retour des cellules MAC et les entrées des cellules MAC et de la cellule diagonale sur lesquelles sont appliquées les coefficients $a_{i,k}$ sont les entrées de chargement de coefficient.

Les coefficients de la matrice A sont chargés dans le réseau diagonale par diagonale. De ce fait, si A est une matrice bande de largeur Lg, le nombre de cellules MAC du réseau peut être réduit à Lg-1. Ainsi, la taille du réseau n'est-elle pas liée à la taille du système, mais à la largeur de bande de la matrice A.

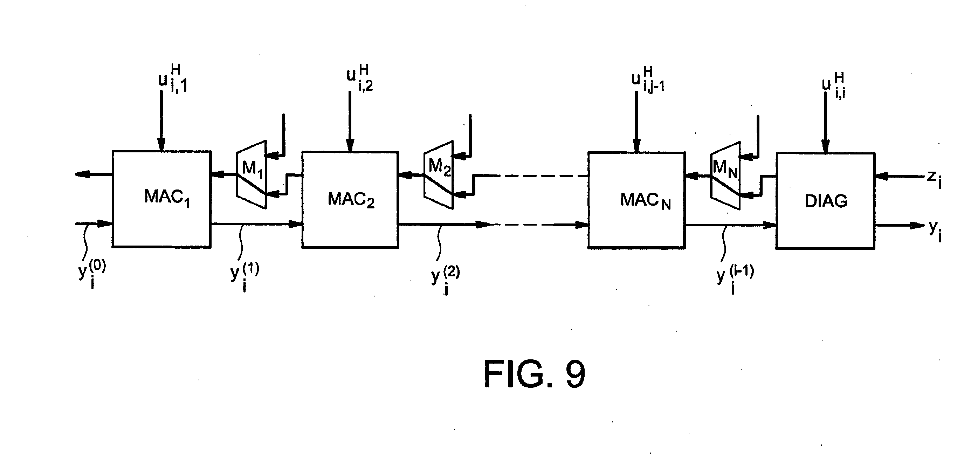

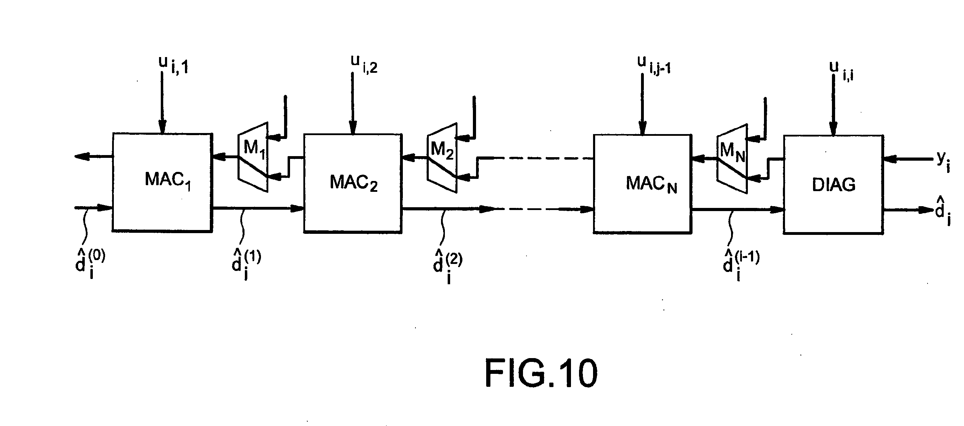

Les figures 9 et 10 représentent, respectivement, le calcul des coefficients $y_i$ de la matrice y et le calcul des coefficients $\hat{d}_i$ du vecteur estimé $\hat{d}$ à l'aide d'un dispositif selon le premier mode de réalisation de l'invention.

Pour la première étape de résolution de système linéaire triangulaire, ce sont les coefficients de la matrice transposée de la matrice conjuguée de U qui chargent les entrées de coefficient des cellules MAC et de la cellule diagonale (cf. figure 9). Pour la deuxième étape de résolution de système linéaire triangulaire, ce sont les coefficients de la matrice U qui chargent les entrées de coefficient des cellules MAC et de la cellule diagonale (cf. figure 10).

Les figures 9 et 10 concernent un dispositif de détection selon le premier mode de réalisation de l'invention. Bien que non représenté sur les figures, il est clair que l'invention concerne également le calcul de la matrice y et le calcul du vecteur $\hat{d}$ à l'aide d'un dispositif de détection selon le deuxième mode de réalisation de l'invention.

Dans le cadre d'une application de l'invention aux téléphones mobiles, le procédé selon l'invention est, par exemple, capable de traiter des données transmises selon les modes de communication FDD et TDD (FDD pour « Frequency Division Duplex » et TDD pour « Time Division Duplex »). Le traitement des données peut avantageusement être effectué en temps réel.

**Revendications**

1.   Dispositif de détection conjointe de données transmises par étalement de spectre par séquence directe, le dispositif comprenant des moyens de mise en oeuvre d'une décomposition de Cholesky pour calculer une matrice U telle que :

$$L = U^H \times U,$$

où L est une matrice d'égalisation et U une matrice triangulaire supérieure, **caractérisé en ce que** les moyens de mise en oeuvre d'une décomposition de Cholesky comprennent:

   - des moyens pour calculer les coefficients diagonaux $u_{i,i}$ de la matrice U selon la formule :

$$u_{i,i} = \sqrt{l_{i,i} - \sum_{k=1}^{i-1} \left| u_{k,i} \right|^2} \qquad (1)$$

où
$l_{i,i}$ est le coefficient diagonal de la ligne de rang i (i=1 à Xi) de la matrice L et $u_{k,i}$ est le coefficient de la ligne de rang k (k=1 à Xk) et de la colonne de rang i de la matrice U,

- des moyens pour calculer les coefficients non diagonaux de la matrice sous la forme :

$$u_{i,j} = \frac{l_{i,j} - \sum_{k=1}^{i-1} u^*_{k,i} \cdot u_{k,j}}{u_{i,i}},$$

les moyens pour calculer les coefficients non diagonaux comprenant
- un réseau de N cellules MAC (MAC$_1$, MAC$_2$, ..., MAC$_N$) montées en série, chaque cellule MAC comprenant une entrée d'accumulation, une sortie d'accumulation, une entrée de retour, une sortie de retour et une entrée de coefficient, la sortie d'accumulation de la cellule de rang p (p=1 à N) étant reliée à l'entrée d'accumulation de la cellule de rang p+1,
- une cellule diagonale (DIAG) comprenant une entrée d'accumulation, une sortie de résultat , une entrée de retour, une sortie de retour et une entrée de coefficient, l'entrée d'accumulation de la cellule diagonale étant reliée à la sortie d'accumulation de la cellule MAC de rang N,
- des moyens de chargement des coefficients u*$_{k,i}$ sur les entrées de retour des cellules MAC,
- des moyens de chargement des coefficients u$_{k,j}$ sur les entrées de coefficient des cellules MAC,
- des moyens de chargement des coefficients u$_{i,i}$ sur l'entrée de coefficient de la cellule diagonale, et
- des moyens de chargement des coefficients l$_{i,j}$ sur l'entrée de retour de la cellule diagonale.

**2.** Dispositif selon la revendication 1, **caractérisé en ce que** les moyens de chargement des coefficients u*$_{k,i}$ sur les entrées de retour des cellules MAC sont constitués d'un ensemble de N multiplexeurs (M$_1$, M$_2$, ..., M$_N$) commandés par un premier état de commande, chaque multiplexeur ayant une première entrée, une deuxième entrée et une sortie, la sortie d'un multiplexeur de rang p (p=1, 2, ..., N) étant reliée à l'entrée de retour de la cellule MAC de même rang, la première entrée du multiplexeur de rang p étant reliée à un coefficient u*$_{k,i}$ différent d'un multiplexeur à l'autre, la deuxième entrée d'un multiplexeur de rang p étant reliée à la sortie de retour de la cellule MAC de rang p+1, la deuxième entrée du multiplexeur de rang N étant reliée à la sortie de retour de la cellule diagonale, le premier état de commande établissant une connexion électrique directe entre la première entrée et la sortie de chaque multiplexeur.

**3.** Dispositif selon la revendication 1, **caractérisé en ce que**, la sortie de retour de la cellule MAC de rang p (p=1, 2, ..., N) étant reliée à l'entrée de retour de la cellule MAC de rang p-1, les moyens de chargement des coefficients u*$_{k,i}$ sur les entrées de retour des cellules MAC sont constitués d'un multiplexeur (M$_N$) commandé par un premier état de commande, le multiplexeur ayant une première entrée, une deuxième entrée et une sortie, la sortie du multiplexeur étant reliée à l'entrée de retour de la cellule MAC de rang N, la première entrée du multiplexeur étant reliée, successivement, à un parmi les coefficients u*$_{k,i}$ et la deuxième entrée du multiplexeur étant reliée à la sortie de retour de la cellule diagonale, le premier état de commande établissant une connexion électrique directe entre la première entrée du multiplexeur et la sortie du multiplexeur.

**4.** Dispositif selon la revendication 2 ou 3, **caractérisé en ce que** les cellules MAC, la cellule diagonale et l'ensemble des multiplexeurs commandés par un deuxième état de commande constituent un réseau permettant de calculer un vecteur estimé d̂ tel que:

$$\hat{d} = L^{-1} A^H e,$$

où

- L est la matrice d'égalisation,
- A$^H$ est une matrice symétrique hermitienne d'une matrice A qui est la matrice produit de convolution entre une matrice C de codes d'étalement utilisés pour coder les données à transmettre et une matrice h qui représente la réponse impulsionnelle du canal de transmission, et
- e est une matrice élaborée à partir des données reçues.

**5.** Procédé de détection conjointe de données transmises par étalement de spectre par séquence directe, le procédé comprenant une étape de décomposition de Cholesky pour calculer une matrice U telle que :

$$L = U^H \times U,$$

où L est une matrice d'égalisation et U une matrice triangulaire supérieure, **caractérisé en ce que** l'étape de décomposition de Cholesky comprend :

- une étape pour calculer les coefficients diagonaux $u_{i,i}$ de la matrice U selon la formule :

$$u_{i,i} = \sqrt{l_{i,i} - \sum_{k=1}^{i-1} |u_{k,i}|^2} \qquad (1)$$

où
$l_{i,i}$ est le coefficient diagonal de la ligne de rang i de la matrice L et $u_{k,i}$ est le coefficient de la ligne de rang k et de la colonne de rang i de la matrice U,
- une étape pour calculer les coefficients non diagonaux de la matrice sous la forme :

$$u_{i,j} = \frac{l_{i,j} - \sum_{k=1}^{i-1} u_{k,i}^* \cdot u_{k,j}}{u_{i,i}},$$

l'étape pour calculer les coefficients non diagonaux comprenant
- une étape de chargement des coefficients $u_{k,i}^*$ sur des entrées de retour de cellules MAC montées en série, chaque cellule MAC comprenant une entrée d'accumulation, une sortie d'accumulation, une entrée de retour, une sortie de retour et une entrée de coefficient, la sortie d'accumulation de la cellule de rang p (p=1 à N) étant reliée à l'entrée d'accumulation de la cellule de rang p+1,
- une étape de chargement des coefficients $u_{k,j-1}$ (j=1, 2, ...,N+1) sur les entrées de coefficient des cellules MAC,
- une étape de chargement du coefficient $u_{i,i}$ sur l'entrée de coefficient d'une cellule diagonale, la cellule diagonale (DIAG) comprenant une entrée d'accumulation, une sortie de résultat, une entrée de retour, une sortie de retour et une entrée de coefficient, l'entrée d'accumulation de la cellule diagonale étant reliée à la sortie d'accumulation de la cellule MAC de rang N, et
- une étape de chargement du coefficient $l_{i,j}$ sur l'entrée de retour de la cellule diagonale,

**6.** Procédé selon la revendication 5, **caractérisé en ce que** les coefficients $u_{k,i}^*$ sont chargés en parallèle sur les entrées de retour des cellules MAC ($MAC_1$, $MAC_2$, ..., $MAC_N$).

**7.** Procédé selon la revendication 5, **caractérisé en ce que** les coefficients $u_{k,i}^*$ sont chargés successivement sur les entrées de retour des cellules MAC ($MAC_1$, $MAC_2$, ..., $MAC_N$).

**8.** Procédé selon l'une quelconque des revendications 5 à 7, **caractérisé en ce qu'**il comprend une étape supplémentaire de calcul d'un vecteur de données estimées.

**9.** Procédé selon la revendication 8, **caractérisé en ce que** l'étape supplémentaire comprend :

- une première étape de résolution de système linéaire triangulaire par la récurrence

$$y_i = \frac{1}{u_{ii}^H}\left(z_i - \sum_{k=1}^{i-1} u_{ik}^H y_k\right)$$

pour la résolution de l'équation $z = U^H.y$, avec $y = U.\hat{d}$ où $\hat{d}$ est le vecteur de données estimées défini par l'équation :

$$\hat{d} = L^{-1} A^H e,$$

où
- L est la matrice d'égalisation,
- $A^H$ est une matrice symétrique hermitienne d'une matrice A qui est la matrice produit de convolution entre une matrice C de codes d'étalement utilisés pour coder les données à transmettre et une matrice h qui représente la réponse impusionnelle du canal de transmission,
- e est une matrice élaborée à partir des données reçues, et
- une deuxième étape de résolution de système linéaire triangulaire par la récurrence

$$\hat{d}_i = \frac{1}{u_{ii}}\left(y_i - \sum_{k=i+1}^{N} u_{ik}\hat{d}_k\right)$$

pour la résolution de l'équation $y = U.\hat{d}$.

**Claims**

1. Device for the joint detection of data transmitted by direct sequence spread spectrum, the device comprising means for carrying out a Cholesky decomposition for calculating a matrix U such that:

$$L = U^H \times U,$$

wherein L is an equalisation matrix and U is an upper triangular matrix, **characterised in that** the means for carrying out a Cholesky decomposition comprise:

- means for calculating the diagonal coefficients $u_{i,i}$ of the matrix U in accordance with the formula

$$u_{i,i} = \sqrt{l_{i,i} - \sum_{k=1}^{i-1} |u_{k,i}|^2} \tag{1}$$

wherein
$l_{i,i}$ is the diagonal coefficient of the row of rank i (i = 1 to Xi) of the matrix L and $u_{k,i}$ is the coefficient of the row of rank k (k = 1 to Xk) and of the column of rank i of the matrix U,
- means for calculating the non-diagonal coefficients of the matrix in the form:

$$u_{i,j} = \frac{l_{i,j} - \sum_{k=1}^{i-1} u_{k,i}^{*} \cdot u_{k,j}}{u_{i,i}},$$

the means for calculating the non-diagonal coefficients comprising

- a network of N MAC cells ($MAC_1$, $MAC_2$, ..., $MAC_N$) connected in series, each MAC cell comprising an accumulation input, an accumulation output, a return input, a return output and a coefficient input, the accumulation output of the cell of rank p (p = 1 to N) being connected to the accumulation input of the cell of rank p + 1,
- a diagonal cell (DIAG) comprising an accumulation input, a result output, a return input, a return output and a coefficient input, the accumulation input of the diagonal cell being connected to the accumulation output of the MAC cell of rank N,
- means for loading the coefficients $u_{k,i}^{*}$ on the return inputs of the MAC cells,
- means for loading the coefficients $u_{k,j}$ on the coefficient input of the MAC cells,
- means for loading the coefficients $u_{i,i}$ on the coefficient input of the diagonal cell, and
- means for loading the coefficients $l_{i,j}$ on the return input of the diagonal cell.

2. Device according to claim 1, **characterised in that** the means for loading the coefficients $u_{k,i}^{*}$ on the return inputs of the MAC cells consist of a set of N multiplexers ($M_1$, $M_2$, ..., $M_N$) controlled by a first control state, each multiplexer having a first input, a second input and an output, the output of a multiplexer of rank p (p = 1, 2, ..., N) being connected to the return input of the MAC cell of the same rank, the first input of the multiplexer of rank p being connected to a coefficient $u_{k,i}^{*}$ which varies from multiplexer to multiplexer, the second input of a multiplexer of rank p being connected to the return output of the MAC cell of rank p + 1, the second input of the multiplexer of rank N being connected to the return output of the diagonal cell, the first control state establishing a direct electrical connection between the first input and the output of each multiplexer.

3. Device according to claim 1, **characterised in that** the return output of the MAC cell of rank p (p = 1, 2, ..., N) being connected to the return input of the MAC cell of rank p - 1, the means for loading the coefficients $u_{k,i}^{*}$ on the return inputs of the MAC cells consist of a multiplexer ($M_N$) controlled by a first control state, the multiplexer having a first input, a second input and an output, the output of the multiplexer being connected to the return input of the MAC cell of rank N, the first input of the multiplexer being connected, in sequence, to one of the coefficients $u_{k,i}^{*}$, and the second input of the multiplexer being connected to the return output of the diagonal cell, the first control state establishing a direct electrical connection between the first input of the multiplexer and the output of the multiplexer.

4. Device according to either claim 2 or claim 3, **characterised in that** the MAC cells, the diagonal cell and the set of the multiplexers controlled by a second control state form a network allowing calculation of an estimated vector $\hat{d}$ such that:

$$\hat{d} = L^{-1} A^{H} e,$$

wherein

- L is the equalisation matrix,
- $A^{H}$ is a Hermitian symmetric matrix of a matrix A which is the matrix produced by convolution between a matrix C of spread codes used for coding the data to be transmitted and a matrix h which represents the pulse response of the transmission channel, and
- e is a matrix produced from the received data.

5. Method for the joint detection of data transmitted by direct sequence spread spectrum, the method including a Cholesky decomposition step for calculating a matrix U such that:

$$L = U^H \times U,$$

wherein L is an equalisation matrix and U is an upper triangular matrix, **characterised in that** the Cholesky decomposition step includes:

- a step for calculating the diagonal coefficients $u_{i,i}$ of the matrix U in accordance with the formula:

$$u_{i,i} = \sqrt{l_{i,i} - \sum_{k=1}^{i-1} |u_{k,i}|^2}$$

$$(1)$$

wherein
$l_{i,i}$ is the diagonal coefficient of the row of rank i of the matrix L and $u_{k,i}$ is the coefficient of the row of rank k and the column of rank i of the matrix U,
- a step for calculating the non-diagonal coefficients of the matrix in the form:

$$u_{i,j} = \frac{l_{i,j} - \sum_{k=1}^{i-1} u^*_{k,i} \cdot u_{k,j}}{u_{i,i}},$$

the step for calculating the non-diagonal coefficients including
- a step for loading the coefficients $u^*_{k,i}$ on return inputs of MAC cells connected in series, each MAC cell comprising an accumulation input, an accumulation output, a return input, a return output and a coefficient input, the accumulation output of the cell of rank p (p = 1 to N) being connected to the accumulation input of the cell of rank p + 1,
- a step for loading the coefficient $u_{k,j-1}$ (j = 1, 2, ..., N + 1) on the coefficient inputs of the MAC cells,
- a step for loading the coefficient $u_{i,i}$ on the coefficient input of a diagonal cell, the diagonal cell (DIAG) comprising an accumulation input, a result output, a return input, a return output and a coefficient input, the accumulation input of the diagonal cell being connected to the accumulation output of the MAC cell of rank N, and
- a step for loading the coefficient $l_{ij}$ on the return input of the diagonal cell.

6. Method according to claim 5, **characterised in that** the coefficients $u^*_{k,i}$ are loaded in parallel on the return inputs of the MAC cells ($MAC_1$, $MAC_2$, ..., $MAC_N$).

7. Method according to claim 5, **characterised in that** the coefficients $u^*_{k,i}$ are loaded in sequence on the return inputs of the MAC cells ($MAC_1$, $MAC_2$, ..., $MAC_N$).

8. Method according to any one of claims 5 to 7, **characterised in that** it includes an additional step for calculating an estimated data vector.

9. Method according to claim 8, **characterised in that** the additional step includes:

- a first step for resolving the triangular linear system by the recurrence

$$y_i = \frac{1}{u_{ii}^H}\left(z_i - \sum_{k=1}^{i-1} u_{ik}^H y_k\right)$$

for resolving the equation $z = U^H.y$, with $y = U.\hat{d}$, wherein $\hat{d}$ is the estimated data vector defined by the equation:

$$\hat{d} = L^{-1} A^H e,$$

wherein
- L is the equalisation matrix,
- $A^H$ is a Hermitian symmetric matrix of a matrix A which is the matrix produced by convolution between a matrix C of spread codes used for coding the data to be transmitted and a matrix h which represents the pulse response of the transmission channel,
- e is a matrix produced from the received data, and
- a second step for resolving the triangular linear system by the recurrence

$$\hat{d}_i = \frac{1}{u_{ii}}\left(y_i - \sum_{k=i+1}^{N} u_{ik}\hat{d}_k\right)$$

for resolving the equation $y = U.\hat{d}$.

**Patentansprüche**

1. Vorrichtung für die gemeinsame Detektion von mit Spektrumspreizung mittels Direktsequenz übertragenen Daten, wobei die Vorrichtung Mittel für die Durchführung einer Cholesky-Zerlegung aufweist, um eine Matrix U wie folgt zu berechnen:

$$L = U^H \times U,$$

wobei L eine Ausgleichsmatrix und U eine obere Dreiecksmatrix ist, **dadurch gekennzeichnet, dass** die Mittel zur Durchführung einer Cholesky-Zerlegung aufweisen:

- Mittel zur Berechnung der Diagonal-Koeffizienten $u_{i,i}$ der Matrix U gemäß der Formel:

$$u_{i,i} = \sqrt{l_{i,i} - \sum_{k=1}^{i-1}\left|u_{k,i}\right|^2} \qquad (1)$$

wobei

$l_{i,i}$ der Diagonal-Koeffizient der Zeile des Ranges i (i=1 bis Xi) der Matrix L, und $u_{k,i}$ der Koeffizient der Zeile des Ranges k (k=1 bis Xk) und der Spalte des Ranges i der Matrix U ist,
- Mittel zur Berechnung der Nicht-Diagonal-Koeffizienten der Matrix in der Form:

$$u_{i,j} = \frac{l_{i,j} - \sum_{k=1}^{i-1} u_{k,i}^* \cdot u_{k,j}}{u_{i,i}} \ ,$$

wobei die Mittel zur Berechnung der Nicht-Diagonal-Koeffizienten aufweisen:
- ein Netzwerk von N in Reihe geschalteten MAC Zellen ($MAC_1$, $MAC_2$, ... , $MAC_N$), wobei jede MAC Zelle einen Akkumulationseingang, einen Akkumulationsausgang, einen Rückkehreingang, einen Rückkehrausgang und einen Koeffizienteneingang aufweist, wobei der Akkumulationsausgang der Zelle des Ranges p (p=1 bis N) mit dem Akkumulationseingang der Zelle des Ranges p+1 gekoppelt ist,
- eine Diagonal-Zelle (DIAG), die einen Akkumulationseingang, einen Ergebnisausgang, einen Rückkehreingang, einen Rückkehrausgang und einen Koeffizienteneingang aufweist, wobei der Akkumulationseingang der Diagonal-Zelle mit dem Akkumulationsausgang der MAC Zelle des Ranges N gekoppelt ist,
- Mittel zum Laden der Koeffizienten $u_{k,i}^*$ in die Rückkehreingänge der MAC Zellen,
- Mittel zum Laden der Koeffizienten $u_{k,j}$ in die Koeffizienteneingänge der MAC Zellen,
- Mittel zum Laden der Koeffizienten $u_{i,1}$ in den Koeffizienteneingang der Diagonal-Zelle, und
- Mittel zum Laden der Koeffizienten $l_{i,j}$ in den Rückkehreingang der Diagonal-Zelle.

2. Vorrichtung nach Anspruch 1, **dadurch gekennzeichnet, dass** die Mittel zum Laden der Koeffizienten $u_{k,i}^*$ in die Rückkehreingänge der MAC Zellen aus einer Menge von N Multiplexern ($M_1$, $M_2$, ... , $M_N$) gebildet sind, die über einen ersten Befehlsstatus gesteuert werden, wobei jeder Multiplexer einen ersten Eingang, einen zweiten Eingang sowie einen Ausgang aufweist, wobei der Ausgang eines Multiplexers des Ranges p (p = 1, 2, ..., N) mit dem Rückkehreingang der MAC Zelle des gleichen Ranges gekoppelt ist, der erste Eingang des Multiplexers des Ranges p mit einem Koeffizienten $u_{k,i}^*$ gekoppelt ist, der sich von einem Multiplexer zum anderen unterscheidet, der zweite Eingang eines Multiplexers des Ranges p mit dem Rückkehrausgang der MAC Zelle des Ranges p+1 gekoppelt ist, der zweite Eingang des Multiplexers des Ranges N mit dem Rückkehrausgang der Diagonal-Zelle gekoppelt ist, und wobei der erste Befehlsstatus eine direkte elektrische Kopplung zwischen dem ersten Eingang und dem Ausgang jedes Multiplexers herstellt.

3. Vorrichtung nach Anspruch 1, **dadurch gekennzeichnet, dass**, wobei der Rückkehrausgang der MAC Zelle des Ranges p (p = 1, 2, ... , N) mit dem Rückkehreingang der MAC Zelle des Ranges p-1 gekoppelt ist, die Mittel zum Laden der Koeffizienten $u_{k,i}^*$ in die Rückkehreingänge der MAC Zellen aus einem Multiplexer ($M_N$) gebildet sind, der von einem ersten Befehlsstatus gesteuert wird, wobei der Multiplexer einen ersten Eingang, einen zweiten Eingang und einen Ausgang aufweist, wobei der Ausgang des Multiplexers mit dem Rückkehreingang der MAC Zelle des Ranges N gekoppelt ist, der erste Eingang des Multiplexers sukzessiv mit einem der Koeffizienten $u_{k,i}^*$ gekoppelt ist, und der zweite Eingang des Multiplexers mit dem Rückkehrausgang der Diagonal-Zelle gekoppelt ist, und wobei der erste Befehlsstatus eine direkte elektrische Kopplung zwischen dem ersten Eingang des Multiplexers und dem Ausgang des Multiplexers herstellt.

4. Vorrichtung nach Anspruch 2 oder 3, **dadurch gekennzeichnet, dass** die MAC Zellen, die Diagonal-Zelle und die Menge der von einem zweiten Befehlsstatus gesteuerten Multiplexer ein Netzwerk bilden, wodurch ein geschätzter Vektor $\hat{d}$ wie folgt berechnet werden kann:

$$\hat{d} = L^{-1} A^H e \ ,$$

wobei

- L die Ausgleichsmatrix ist,
- $A^H$ eine symmetrische hermitesche Matrix einer Matrix A ist, welche die Matrix ist, die durch Faltung zwischen einer Matrix C mit für die Codierung der zu übertragenden Daten verwendeten Spreizcodes und einer die Impulsantwort des Übertragungskanals darstellenden Matrix h erzeugt wird, und
- e eine Matrix ist, die aus den empfangenen Daten erstellt wird.

5. Verfahren zur gemeinsamen Detektion von durch Spektrumspreizung mittels Direktsequenz übertragenen Daten, wobei das Verfahren einen Schritt der Cholesky-Zerlegung aufweist, um eine Matrix U wie folgt zu berechnen:

$$L = U^H \times U,$$

wobei L eine Ausgleichsmatrix und U eine obere Dreiecksmatrix ist, **dadurch gekennzeichnet, dass** der Schritt der Cholesky-Zerlegung aufweist:

- einen Schritt zur Berechnung der Diagonal-Koeffizienten $u_{i,i}$ der Matrix U gemäß der Formel:

$$u_{i,i} = \sqrt{l_{i,i} - \sum_{k=1}^{i-1} |u_{k,i}|^2} \qquad (1)$$

wobei
$l_{i,i}$ der Diagonal-Koeffizient der Zeile des Ranges i der Matrix L, und $u_{k,i}$ der Koeffizient der Reihe des Ranges k und der Spalte des Ranges i der Matrix U ist,
- einen Schritt zur Berechnung der Nicht-Diagonal-Koeffizienten der Matrix in der folgenden Form:

$$u_{i,j} = \frac{l_{i,j} - \sum_{k=1}^{i-1} u_{k,i}^* . u_{k,j}}{u_{i,i}},$$

 wobei der Schritt zur Berechnung der Nicht-Diagonal-Koeffizienten aufweist:
- einen Schritt zum Laden der Koeffizienten $u_{k,i}^*$ in die Rückkehreingänge der in Reihe geschalteten MAC Zellen, wobei jede MAC Zelle einen Akkumulationseingang, einen Akkumulationsausgang, einen Rückkehreingang, einen Rückkehrausgang und einen Koeffizienteneingang aufweist, wobei der Akkumulationsausgang der Zelle des Ranges p (p=1 bis N) mit dem Akkumulationseingang der Zelle des Ranges p+1 gekoppelt ist,
- einen Schritt zum Laden der Koeffizienten $u_{k,j-1}$ (j=1, 2, ..., N+1) in die Koeffizienteneingänge der MAC Zellen,
- einen Schritt zum Laden des Koeffizienten $u_{i,i}$ in den Koeffizienteneingang einer Diagonal-Zelle, wobei die Diagonal-Zelle (DIAG) einen Akkumulationseingang, einen Ergebnisausgang, einen Rückkehreingang, einen Rückkehrausgang und einen Koeffizienteneingang aufweist, wobei der Akkumulationseingag der Diagonal-Zelle mit dem Akkumulationsausgang der MAC Zelle des Ranges N gekoppelt ist, und
- einen Schritt für das Laden des Koeffizienten $l_{i,j}$ in den Rückkehreingang der Diagonal-Zelle.

6. Verfahren nach Anspruch 5, **dadurch gekennzeichnet, dass** die Koeffizienten $u_{k,i}^*$ parallel in die Rückkehreingänge der MAC Zellen ($MAC_1$, $MAC_2$, ..., $MAC_N$) geladen werden.

7. Verfahren nach Anspruch 5, **dadurch gekennzeichnet, dass** die Koeffizienten $u_{k,i}^*$ sukzessive in die Rückkehreingänge der MAC Zellen ($MAC_1$, $MAC_2$, ..., $MAC_N$) geladen werden.

8. Verfahren nach einem der Ansprüche 5 bis 7, **dadurch gekennzeichnet, dass** es einen zusätzlichen Schritt für die Berechnung eines Vektors geschätzter Daten aufweist.

9. Verfahren nach Anspruch 8, **dadurch gekennzeichnet, dass** der zusätzliche Schritt aufweist:

- einen ersten Schritt zum Lösen eines dreieckigen linearen Systems durch die Rekursion

$$y_i = \frac{1}{u_{ii}^H}\left( z_i - \sum_{k=1}^{i-1} u_{ik}^H\, y_k \right)$$

für die Auflösung der Gleichung $z = U^H . y$ , mit $y = U . \hat{d}$, wobei $\hat{d}$ der Vektor der geschätzten Daten ist, der durch die folgende Gleichung definiert ist:

$$\hat{d} = \mathtt{L^{-1}\ A^H\ e,}$$

wobei
- L die Ausgleichsmatrix ist,
- $A^H$ eine symmetrische hermitesche Matrix einer Matrix A ist, welche die Matrix ist, die durch Faltung zwischen einer Matrix C mit für die Codierung der zu übertragenden Daten verwendeten Spreizcodes und einer die Impulsantwort des Übertragungskanals darstellenden Matrix h erzeugt wird,
- e eine Matrix ist, welche aus den empfangenen Daten erstellt wird, und
- einen zweiten Schritt zum Lösen eines dreieckigen linearen Systems durch die Rekursion

$$\hat{d}_i = \frac{1}{u_{ii}}\left( y_i - \sum_{k=i+1}^{N} u_{ik}\, \hat{d}_k \right)$$

für die Auflösung der Gleichung $y = U.\hat{d}$.

instant t

a

MAC

accu

x

## FIG. 1A

instant t+1

MAC

x

accu+ax

## FIG. 1B

a(t)

x(t)

1

3

4

2

accu(t)

# FIG. 2

$a_d$

instant t

accu → DIAG → b

## FIG. 3A

instant t+1

$\dfrac{(b-accu)}{a_d}$ ← DIAG → $\dfrac{(b-accu)}{a_d}$

## FIG. 3B

FIG. 4

FIG. 5

$( )^2 \quad (-)$

$\sum \sqrt{\phantom{x}}$

5

$u_{i,i}$ ← ← $I_{i,i}$

← $u_{k,i} \ (k=k_1 \ldots k_N)$

$u_{k_1,j}$   $u_{k_2,j}$   $u_{k_N,j}$   $u_{i,i}$

$u^*_{k_1,i}$   $u^*_{k_2,i}$   $u^*_{k_N,i}$

MAC$_1$   M$_1$   MAC$_2$   M$_2$   MAC$_N$   M$_N$   DIAG   ← $I_{i,j}$

RESULTAT $(u_{i,j})$

FIG. 6

EP 1 447 916 B1

FIG. 7

EP 1 447 916 B1

FIG. 8

FIG. 9

FIG.10

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- A vector multiprocessor for real-time multi-user détection in spread spectrum communication. *IEEE International Conference on Application Specific Systems, Architectures and Processors,* Juillet 2000
- **WANG X et al.** ADAPTIVE JOINT MULTIUSER DETECTION AND CHANNEL ESTIMATION IN MULTIPATH FADING CDMA CHANNELS. *WIRELESS NETWORKS,* 01 Octobre 1998, vol. 4 (6), 453-470

- **KUNG H T.** SYSTOLIC ALGORITHMS AND THEIR IMPLEMENTATIONS. *PROCEEDINGS OF THE SEVENTEENTH HAWAII INTERNATIONAL CONFERENCE ON SYSTEM SCIENCES 1984,* 04 Janvier 1984, vol. 1 (00), 5-11
- **KUNG, H.T. ; LEISERSON, C.E.** *Introduction to VLSI systems,* 1980